# EUROPEAN PATENT SPECIFICATION

(11) **EP 3 230 619 B1**
(45) Date of publication and mention of the grant of the patent: **22.07.2020**
(21) Application number: 14908074.9
(22) Date of filing: 09.12.2014
(51) Int. Cl.: F16F 15/10, F16F 15/121, F16F 15/073, F16F 3/02

(54) **HINGELESS, LARGE-THROW NEGATIVE STIFFNESS STRUCTURE**
GELENKLOSE WEITWURFSTRUKTUR MIT NEGATIVER STEIFHEIT
STRUCTURE À RIGIDITÉ NÉGATIVE À GRANDE PORTÉE SANS ARTICULATION

(43) Date of publication of application: 18.10.2017
(73) Proprietor: HRL Laboratories LLC, Malibu, CA 90265-4797 (US)
(72) Inventor: CHURCHILL, Christopher, B., Malibu, CA 90265-4797 (US); SHAHAN, David, W., Malibu, CA 90265-4797 (US); MCKNIGHT, Geoffrey, P., Malibu, CA 90265-4797 (US); HERRERA, Guillermo, A., Malibu, CA 90265-4797 (US)
(74) Representative: Gulde & Partner
(86) International application number: PCT/US2014/069404
(87) International publication number: WO 2016/093810

(56) References cited:
- WO-A1-93/06795
- GB-A- 665 741
- GB-A- 838 612
- JP-A- 2014 020 502
- US-A- 4 607 382
- US-A- 4 778 037
- US-A1- 2011 278 425
- US-A1- 2013 118 098

## Description

### FIELD

The following description relates generally to negative stiffness structures and, more particularly, hingeless negative stiffness structures.

### BACKGROUND

A variety of non-linear structures exhibit negative mechanical stiffness, such as snap-through beams and buckling beams. Negative stiffness may also be exhibited by various combinations and arrangements of springs and/or beams with pinned or clamped boundaries. For instance, negative stiffness may be exhibited due to over-rotation of one of the components, or rolling or sliding contact between components. Negative stiffness mechanisms are useful in a variety of applications, including vibration isolation, shock mitigation, and signal processing.

Exemplary embodiments of shock absorbing or shock mitigating devices of the prior art are disclosed in GB 665 741 A, WO 93/06795A1 and JP S60 24627 A.

JP S60 24627 A can be considered to form the prior art closest to the subject-matter of claim 1, and shows the features of the pre-amble of claim 1.

However, related art negative stiffness mechanisms may incorporate pins, hinges, or sliding mechanical joints which increase the complexity and cost of the mechanism. Related art negative stiffness mechanisms also typically include a bearing component, which increases the cost of the mechanism and increases friction and wear, which may limit the useful life of the mechanism. Additionally, related art negative stiffness mechanisms generally have a relatively small range of motion (e.g., a low throw to beam length ratio). For instance, related art negative stiffness mechanisms may be limited to a beam length to throw ratio of approximately or about 20:1 or 10:1.

### SUMMARY

The present invention is directed to a negative stiffness structure as defined in the claims.

The present disclosure is directed to various embodiments of negative stiffness structures. In one embodiment, the negative stiffness structure includes at least one flexible tensile member and at least one curved compressive member. A first end of the flexible tensile member is coupled to a first structure. A first end of first end of the curved compressive member is coupled to a second structure and a second end of the curved compressive member is coupled to a second end of the flexible tensile member. A length of the flexible tensile member is greater than a length of the curved compressive member. A tip of the negative stiffness structure is configured to exhibit a negative stiffness mechanical response to a load applied to the tip. The negative stiffness mechanical response acts in a direction orthogonal to the length of the tensile member.

The compressive member may have a substantially uniform thickness or a non-uniform thickness. The at least one curved compressive member may include a stack of a series of curved compressive members. The at least one flexible tensile member may include a series of tensile members. The at least one compressive member may be a rectangular beam. The at least one tensile member may be a beam, a rope, a cable, a rod, a chain, or a belt.

The negative stiffness structure may also include a second curved compressive member having a first end coupled to the second structure and a second end coupled to the second end of the tensile member. The first compressive member may be buckled in a first direction and the second compressive member may be buckled in a second direction opposite the first direction. The first and second compressive members may be cosine shaped. The negative stiffness structure may also include first and second wedge-shaped inserts between the first compressive member and the second compressive member. The first wedge-shaped insert may be proximate the first ends of the first and second compressive members, and the second wedge-shaped insert may be proximate the second ends of the first and second compressive members.

The first structure may include a pair of curved walls defining a tapered recess. The first end of the tensile member may be received in the tapered recess. The negative stiffness structure may include an actuator coupled to the first end of the tensile member. The actuator may be configured to adjust tension applied to the tensile member or adjust an effective length of the tensile member to vary the mechanical response of the tip. The negative stiffness structure may include a clamping actuator coupled to the first end of the tensile member. The clamping actuator may be configured to clamp the tensile member at a plurality of positions along a length of the tensile member. The second structure may include a clutching mechanism including a first clutching member having a convex surface and a second clutching member having a concave surface mating with the convex surface of the first clutching member. The second clutching member may be configured to slide along the convex surface of the first clutching member between a first angular position and a second angular position.

In one embodiment, the negative stiffness structure includes at least one flexible tensile member, an actuator coupled to a first end of the at least one flexible tensile member, and first and second curved compressive members. First ends of the curved compressive members are coupled to a structure. Second ends of the curved compressive members are coupled to a second end of the flexible tensile member. A length of the tensile member is greater than a length of each of the first and second curved compressive members. The first curved compressive member is curved in a first direction and the second curved compressive member is curved in a second direction opposite the first direction. A tip of the negative stiffness structure is configured to exhibit a mechanical response when a load is applied to the tip. The actuator is configured to vary the mechanical response of the tip. The actuator may be a toothed gear, a pulley, or a clamp configured to clamp the tensile member at a series of positions along the length of the tensile member.

This summary is provided to introduce a selection of concepts that are further described below in the detailed description. This summary is not intended to identify key or essential features of the claimed subject matter, nor is it intended to be used in limiting the scope of the claimed subject matter.

### BRIEF DESCRIPTION OF THE DRAWINGS

These and other features and advantages of embodiments of the present disclosure will become more apparent by reference to the following detailed description when considered in conjunction with the following drawings. In the drawings, like reference numerals are used throughout the figures to reference like features and components. The figures are not necessarily drawn to scale.
FIG. 1A is a schematic side view of a negative stiffness structure including a tensile member and a pair of compressive members according to one embodiment of the present disclosure in a first position;
FIG. 1B is a side view of the negative stiffness structure of FIG. 1A in a second position by tensioning the tensile member;
FIG. 1C is a side view of the negative stiffness structure of FIG. 1A in a third position by deflecting a tip of the negative stiffness structure upward;
FIG. 1D is a side view of the negative stiffness structure of FIG. 1A in a fourth position by deflecting a tip of the negative stiffness structure downward;
FIG. 2 is a graph illustrating the mechanical response of a negative stiffness structure according to one embodiment of the present disclosure for a range of different effective lengths of the tensile member;
FIG. 3 is a schematic side view of a negative stiffness structure according to another embodiment of the present disclosure;
FIG. 4 is a schematic side view of a negative stiffness structure according to another embodiment of the present disclosure;
FIG. 5 is a schematic side view of a negative stiffness structure according to another embodiment of the present disclosure;
FIG. 6 is a schematic side view of a negative stiffness structure according to another embodiment of the present disclosure;
FIG. 7 is a graph illustrating the mechanical response of the negative stiffness structure of FIG. 6 for a range of different clamping positions of the tensile member;
FIGS. 8A-8E are schematic side views of a negative stiffness structure according to another embodiment of the present disclosure;
FIG. 9 is a schematic side view of a negative stiffness structure according to another embodiment of the present disclosure; and
FIG. 10 is a side view of a negative stiffness structure according to one embodiment of the present disclosure incorporated into a host structure.

### DETAILED DESCRIPTION

The present disclosure is directed to various embodiments of a negative stiffness structure. Embodiments of the negative stiffness structure are configured to vary the mechanical response of the structure (i.e., a tunable or variable negative stiffness structure). Embodiments of the negative stiffness structure are also hingeless. The negative stiffness structures of the present disclosure may be incorporated into any desired structure or device depending on the intended purpose or function of the negative stiffness structure, such as, for instance, as a tuned-mass damper or as a mechanism for vibration isolation, shock mitigation, or signal processing. For instance, the negative stiffness structures of the present disclosure may be incorporated into a structure as an equipment mount (e.g., a mount for a gyroscope), as a component of an active or passive vehicle suspension (e.g., for vibration isolation between the engine and the chassis and/or between a wheel and the road), or as a component of an aircraft (e.g., for vibration isolation between a helicopter blade and a hub of the helicopter).

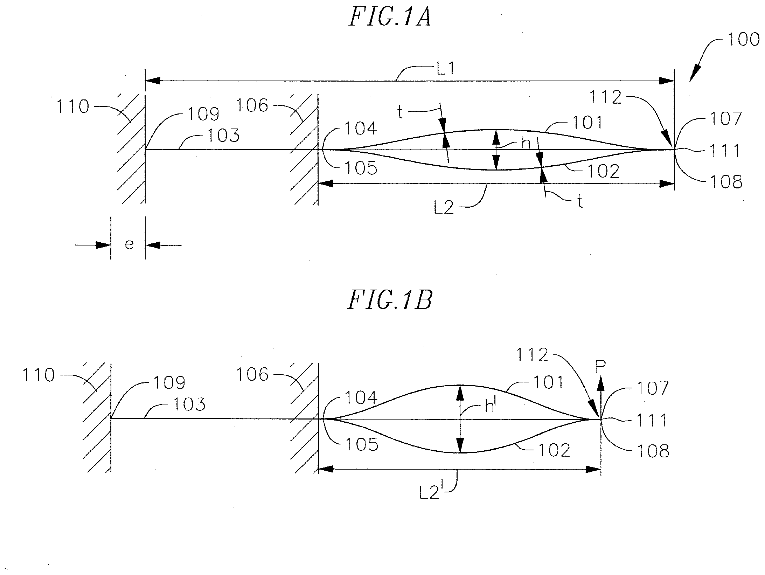

With reference now to FIGS. 1A-1D, a negative stiffness structure **100** according to one embodiment of the present disclosure includes a pair of compressive elements or members **101, 102** and a tensile element or member **103.** In the illustrated embodiment, the compressive members **101, 102** are placed in compression and the tensile member **103** is placed in tension. Such structures in which the components are segregated into pure tension and pure compression members are known as tensegrity structures. An inner or base end **104, 105** of each of the compressive members **101, 102,** respectively, is fixedly coupled (e.g., clamped or pinned or coupled through a flexible member (e.g., a rubber bushing)) to a first structure **106** and outer ends **107, 108** of the compressive members **101, 102** are free (i.e., the compressive members **101, 102** are cantilevered from the first structure **106**). In the illustrated embodiment, the inner ends **104, 105** and the outer ends **107, 108,** respectively, of the compressive members **101, 102** are coupled together. Additionally, in the illustrated embodiment, an inner or base end **109** of the tensile member **103** is coupled to a second structure **110** and an outer end **111** of the tensile member **103** is connected to the outer ends **107, 108** of the compressive members **101, 102.** Additionally, the tensile member **103** may pass through or around the first structure **106** such that the tensile member **103** is not coupled to the first structure **106.** Together, the outer ends **111, 107, 108** of the tensile member **103** and the compressive members **101, 102** define a tip **112** of the negative stiffness structure **100.**

Although in the illustrated embodiment, the negative stiffness structure **100** includes a pair of compressive members **101, 102,** in one or more alternate embodiments, the negative stiffness structure **100** may have any other suitable number of compressive members, such as, for instance, from one to twenty. In one embodiment, the negative stiffness structure **100** may include one or more stacks of compressive members, such as, for instance, stacks of up to ten or more compressive members (e.g., upper and/or lower stacks of compressive members). Although in one embodiment each stack may include the same number of compressive members (e.g., the number of compressive members in the upper and lower stacks may be symmetric about the tensile member **103**), in one or more alternate embodiments, the stacks may have different numbers of compressive members. Additionally, in the illustrated embodiment, the compressive members **101, 102** are rectangular beams, although in one or more alternate embodiments, the compressive members **101, 102** may have any other suitable shape.

Additionally, in the illustrated embodiment, the compressive members **101, 102** are preformed into a curved or contoured shape (e.g., a bell curve or a cosine shape with a single hump). In one embodiment, the compressive member **101, 102** may have any other suitable shape after being compressed. The compressive members **101, 102** in the illustrated embodiments are also curved or contoured in opposite directions (e.g., the upper compressive member **101** is curved upward and the lower compressive member **102** is curved downward). Accordingly, in the illustrated embodiment, the inner and outer ends of the respective compressive members contact each other and intermediate portions of the compressive members **101, 102** between the inner and outer ends are spaced apart by a maximum amplitude **h.** For instance, in the illustrated embodiment, the central portions of the compressive members **101, 102** are spaced apart by amplitude **h.** Additionally, although in the illustrated embodiment each of the compressive members **101, 102** has a substantially constant thickness **t,** in one or more alternate embodiments, one or more of the compressive members **101, 102** may have a non-uniform thickness. Furthermore, although in the illustrated embodiment the upper compressive member **101** has the same or substantially the same thickness profile as the lower compressive member **102,** in one or more alternate embodiments, the upper compressive member **101** may have a different thickness profile than the lower compressive member **102.**

In one embodiment, the compressive members **101, 102** may be formed from any material having a relatively high elastic strain limit, such as, for instance, fiberglass, titanium, or combinations thereof. In one or more alternate embodiments, the compressive members **101, 102** may be formed out of any other suitable material, such as, for instance, steel, silicon, or combinations thereof.

With continued reference to the embodiment illustrated in FIGS. 1A-1D, the tensile member **103** may be any structure suitable for carrying tensile loads, such as, for instance, a beam, a rope (e.g., a wire or Kevlar rope), a cable (e.g., a braided cable), a thin rod, a chain, or a drive belt. In one embodiment, the tensile member **103** may be a rectangular beam that is the same or similar to one of the compressive members **101, 102,** but without the preformed shape (e.g., the tensile member **103** may be a flat rectangular beam). Additionally, in one embodiment, the tensile member **103** may be flexible such that the tensile member **103** has a low bending stiffness, but is stiff when a tensile load is applied to the tensile member **103.** Additionally, the tensile member **103** may have a low or relatively low bending stiffness in only one plane, which may aid in restricting the motion of the negative stiffness structure **100** to a single plane (e.g., the tensile member **103** may be a roller chain with low bending stiffness in only one plane). In one or more alternate embodiments, the tensile member **103** may have a bending stiffness configured to provide a positive stiffness to the negative stiffness structure **100** that would stabilize the negative stiffness structure **100** into a finite stiffness structure. If the positive stiffness of the tensile member **103** is only slightly higher than the negative stiffness of the compressive members **101, 102,** the positive and negative stiffnesses combine to create a quasi-zero-stiffness (QZS) structure **100.**

In an initial state illustrated in FIG. 1A, the tensile member **103** has an initial length L**₁** and the linear distance between the inner ends **104, 105** and the outer ends **107, 108** of the compressive members **101, 102** has an initial length **L₂.** In the illustrated embodiment, the length **L₁** of the tensile member **103** is longer than the initial length **L₂** between the inner ends **104, 105** and the outer ends **107, 108** of the compressive members **101, 102.** As illustrated in FIG. 1B, the effective length of the tensile member **103** and/or the tension applied to the tensile member **103** may be varied based on the desired mechanical response of the negative stiffness structure **100** (i.e., the negative stiffness response of the structure **100** may be adjusted by changing the tension applied to the tensile member **103** and/or the effective length of the tensile member **103**). Tensioning the tensile member **103** is configured to increase the compressive load on the compressive members **101, 102** by decreasing the distance **L₂'** between the inner ends **104, 105** and the outer ends **107, 108** of the compressive members **101, 102.** Additionally, as illustrated in FIG. 1B, increasing the compressive load on the compressive members **101, 102** increases the maximum amplitude **h'** between the intermediate portions of the compressive members **101, 102.** Tension may be applied to the tensile member **103** by pulling on the inner end of the tensile member **103** with any suitable mechanism. In the embodiment illustrated in FIG. 1B, the tension applied to the tensile member **103** may be increased by moving the second structure **110** to which the inner end of the tensile member **103** is fixedly coupled by a distance **e** in a direction away from the outer end **111** of the tensile member **103.** In another embodiment, the inner end **109** of the tensile member **103** may be coupled to an actuator (e.g., a pulley or a gear) configured to decrease the effective length of the tensile member **103** and thereby increase the tension load applied to the tensile member **103.**

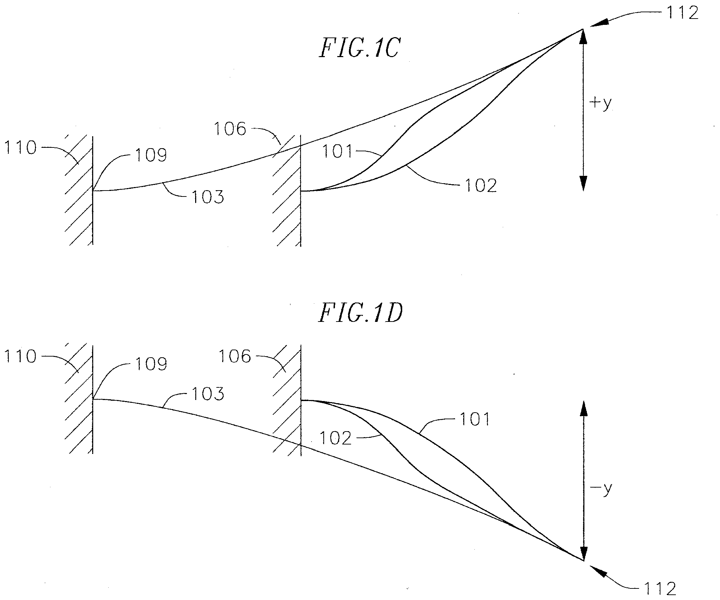

As illustrated in FIG. 1C, when an upward force is applied to the tip **112** of the negative stiffness structure **100** (i.e., the common outer ends **111, 107, 108** of the tensile member **103** and the compressive members **101, 102**) such that the tip **112** is deflected upward in the +y direction, the structure **100** is configured to initially exhibit a positive stiffness resisting the upward deflection. However, as the force and the magnitude of the upward deflection increase, the structure **100** will reach a snap-through point at which the structure **100** will "snap-through" to a stable higher position, shown in FIG. 1C. During snap through, the structure **100** exhibits negative stiffness. That is, the tip **112** of the structure **100** exhibits an upward force (i.e., a force in the direction in which the load was applied to the tip **112** of the structure **100**). Accordingly, the structure **100** exhibits non-linear stiffness across the range of upward deflections of the tip **112** of the structure **100** (i.e., the structure **100** exhibits both positive and negative stiffness as the tip **112** of the structure **100** is deflected upward).

Similarly, as illustrated in FIG. 1D, when a downward force is applied to the tip **112** of the structure **100** such that the tip **112** is deflected downward in the -y direction, the structure **100** is initially configured to exhibit a positive stiffness resisting the downward deflection. However, as the force and the magnitude of the downward deflection increase, the structure **100** will reach a snap-through point at which the structure **100** will snap-through to a stable lower position, shown in FIG. 1D. During snap through, the structure **100** exhibits negative stiffness. That is, the tip **112** of the structure **100** exhibits a downward force (i.e., a force in the direction in which the load was applied to the tip **112** of the structure **100**).

The force exhibited at the tip **112** of the structure **100** may be transferred to the system or device into which the negative stiffness structure **100** is incorporated by any suitable mechanism, such as, for instance, a tie rod or other suitable push-pull mechanism.

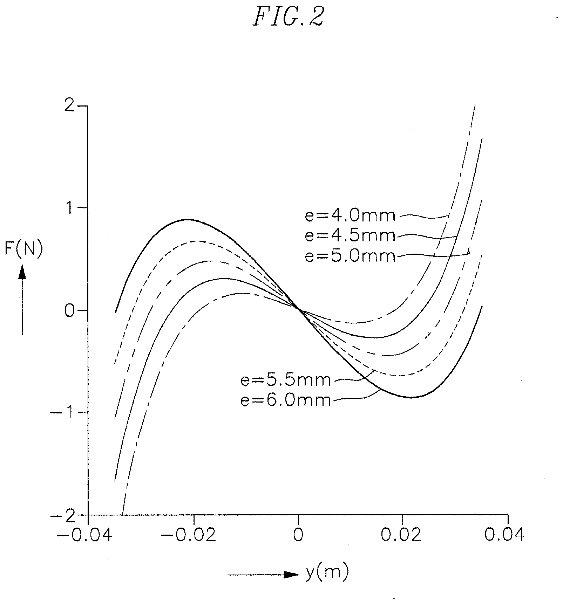

FIG. 2 is a plot showing the resolved vertical force at the tip **112** of the structure **100** when the inner end **109** of the tensile member **103** had been pulled by a range of different distances **e** (see FIG. 1A) from approximately or about 4mm to approximately or about 6mm away from the outer end **111** of the tensile member **103.** The plot shown in FIG. 2 was obtained from a negative stiffness structure **100** that included a wire rope tensile member **103** having a diameter of approximately or about 1/16 inch and an initial length **L₁** of approximately or about 150 mm. Each of the upper and lower compressive members **101, 102** were preformed in opposite directions into a cosine shape and had an initial length **L₂** of approximately or about 100 mm between the inner ends **104, 105** and the outer ends **107,** 108 of the compressive members **101, 102.** Additionally, each of the compressive members **101, 102** was a rectangular beam having a width of approximately or about 10 mm and a constant thickness **t** of approximately or about 0.3mm. In the initial state, the maximum distance or amplitude **h** between the intermediate portions of the upper and lower compressive members **101, 102** was approximately or about 10mm. In particular, FIG. 2 shows the resolved vertical force at the tip **112** of the structure **100** when the inner end **109** of the tensile member **103** had been pulled by a distance **e** of approximately or about 4.0mm, approximately or about 4.5mm, approximately or about 5.0mm, approximately or about 5.5mm, and approximately or about 6.0mm.

As illustrated in FIG. 2, when the inner end **109** of the tensile member **103** had been pulled by a distance **e** of approximately or about 4.0mm from its initial position, the structure **100** exhibited positive stiffness for tip **112** deflections from approximately or about -0.01 m to approximately or about +0.01 m and exhibited negative stiffness for tip **112** deflections from approximately or about -0.01m to approximately or about - 0.04m and from approximately or about +0.01m to approximately or about +0.04m. Additionally, when the inner end **109** of the tensile member **103** had been pulled by a distance **e** of approximately or about 4.0mm, the structure **100** exhibited a maximum positive stiffness force of approximately or about 0.1 N at a tip **112** deflection of approximately or about 0.01m, and a maximum negative stiffness force of approximately or about 2 N at a tip **112** deflection of approximately or about 0.04m. Accordingly, the embodiment of the negative stiffness structure **100** tested was configured to exhibit maximum negative stiffness at a throw (i.e., deflection of the tip **112**) of approximately or about 40% of the length L₂ between the inner ends **104, 105** and the outer ends **107, 108** of the compressive members **101, 102** (i.e., the structure **100** exhibited maximum negative stiffness at a throw of approximately or about 40 mm and the initial length L₂ between the inner ends **104, 105** and the outer ends **107, 108** of the compressive members **101, 102** was approximately or about 100 mm).

When the inner end **109** of the tensile member **103** had been pulled by a distance **e** of approximately or about 6.0mm, the structure **100** exhibited positive stiffness for tip **112** deflections from approximately or about -0.02m to approximately or about +0.02m and exhibited negative stiffness for tip **112** deflections from approximately or about -0.02m to approximately or about -0.04m and from approximately or about +0.02m to approximately or about +0.04m. Accordingly, increasing the tension applied to the tensile member **103** is configured to increase the range of tip **112** deflections over which the structure **100** is configured to exhibit positive stiffness. Additionally, when the inner end **109** of the tensile member **103** had been pulled by a distance **e** of approximately or about 6.0mm, the structure **100** exhibited a maximum positive stiffness force of approximately or about 0.9 N at a tip deflection of approximately or about 0.02m and a maximum negative stiffness force of approximately or about 0 N at a tip deflection of approximately or about 0.04m.

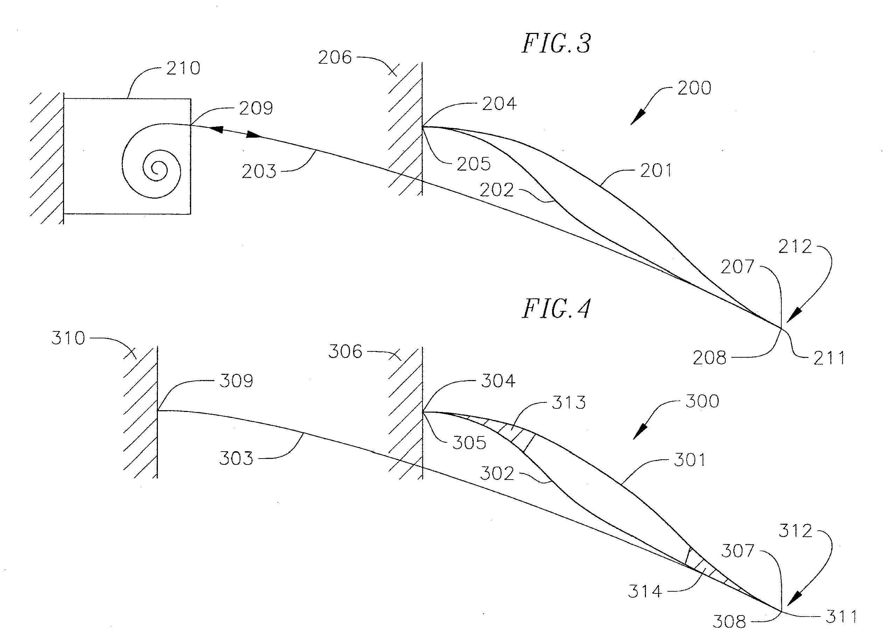

With reference now to FIG. 3, a negative stiffness structure **200** according to another embodiment of the present disclosure includes a pair of upper and lower compressive members **201, 202** and a tensile member **203.** Inner ends **204, 205** of the compressive members **201, 202,** respectively, are fixedly coupled to a structure **206** and outer ends **207, 208** of the compressive members **201, 202** are free. In the illustrated embodiment, the inner ends **204, 205** and the outer ends **207, 208,** respectively, of the compressive members **201, 202** are coupled together. The compressive members **201, 202** are preformed into a curved or contoured shape (e.g., a cosine shape) extending in opposite directions (e.g., the upper compressive member **201** is curved upward and the lower compressive member **202** is curved downward). Additionally, in the illustrated embodiment, an inner end **209** of the tensile member **203** is operatively coupled to an actuator **210** and an outer end **211** of the tensile member **203** is coupled to the outer ends **207, 208** of the compressive members **201, 202.** Together, the outer ends **211, 207, 208** of the tensile member **203** and the compressive members **201, 202** define a tip **212** of the negative stiffness structure **200.** The tensile member **203** and the compressive members **201, 202** may be the same or similar to the tensile member **103** and the compressive members **101, 102** described above with reference to the embodiment illustrated in FIGS. 1A-1D.

The actuator **210** is configured to reduce the effective length of the tensile member **203** and/or increase the tension applied to the tensile member **203** to modify the mechanical response of the structure **200** when a load is applied to the tip **212** of the structure **200.** For instance, in one embodiment, the mechanical response of the structure **200** may vary as shown in FIG. 2 depending on the effective length and/or the tension load applied to the tensile member **203.** The actuator **210** may be any suitable type or kind of actuator configured to reduce the effective length of the tensile member **203** and/or increase the tension applied to the tensile member **203,** such as, for instance, a toothed gear mechanism or a pulley.

With reference now to the embodiment illustrated in FIG. 4, a negative stiffness structure **300** according to another embodiment of the present disclosure includes a pair of upper and lower compressive members **301, 302** and a tensile member **303.** Inner ends **304, 305** of the compressive members **301, 302,** respectively, are fixedly coupled to a first structure **306** and outer ends **307, 308** of the compressive members **301, 302** are free. In the illustrated embodiment, the inner ends **304, 305** and the outer ends **307, 308,** respectively, of the compressive members **301, 302** are coupled together. The compressive members **301, 302** are preformed into a curved or contoured shape (e.g., a cosine shape) extending in opposite directions (e.g., the upper compressive member **301** is curved upward and the lower compressive member **302** is curved downward). Additionally, in the illustrated embodiment, an inner end **309** of the tensile member **303** is coupled to a second structure **310** and an outer end **311** of the tensile member **303** is coupled to the outer ends **307, 308** of the compressive members **301, 302.** Together, the outer ends **311, 307, 308** of the tensile member **303** and the compressive members **301, 302** define a tip **312** of the negative stiffness structure **300.** In one or more alternate embodiments, the inner end **309** of the tensile member **303** may be coupled to an actuator (e.g., a pulley or a gear), such as, for instance, the actuator **210** described above with reference to the embodiment illustrated in FIG. 3, configured to modify the mechanical response of the structure **300** when a load is applied to the tip **312** of the structure **300.** The tensile member **303** and the compressive members **301, 302** may be the same or similar to the tensile member **103** and the compressive members **101, 102** described above with reference to the embodiment illustrated in FIGS. 1A-1D.

With continued reference to the embodiment illustrated in FIG. 4, the negative stiffness structure **300** also includes a pair of wedge-shaped inserts **313, 314** disposed between the inner ends **304, 305** and the outer ends **307, 308,** respectively, of the upper and lower compressive members **301, 302** (i.e., the wedge-shaped inserts **313, 314** are located at opposite ends between the compressive members **301, 302**). That is, in the illustrated embodiment, the wedge-shaped insert **313** is located proximate the inner ends **304, 305** of the compressive members **301, 302** and the wedge-shaped insert **314** is located proximate the outer ends **307, 308** of the compressive members **301, 302.** In one embodiment, the wedge-shaped inserts **313, 314** may be made out of any suitable elastic material, such as, for instance, natural or synthetic rubber (e.g., a synthetic viscoelastic urethane polymer manufactured by Sorbothane, Inc.). The wedge-shaped inserts **313, 314** may be coupled to the compressive members **301, 302** by any suitable process, such as, for instance, bonding, adhering, or molding. In the illustrated embodiment, the wedge-shaped inserts **313, 314** match or substantially match the shape or contour of the inner and outer ends **304, 305, 307, 308** of the compressive members **301, 302** when the negative stiffness structure **300** is in a neutral position. Additionally, in one embodiment, the wedge-shaped inserts **313, 314** may be configured elastically deform to match the shape or contour of the inner and outer ends **304, 305, 307, 308** of the compressive members **301, 302** as the compressive members **301, 302** buckle in response to an external load applied to the tip **312** of the structure **300.** The wedge-shaped inserts **313, 314** are configured to provide additional stability to the negative stiffness structure **300** at high deflections of the tip **312** of the structure **300** without requiring additional pre-shaping of the compressive members **301, 302.** Accordingly, the wedge-shaped inserts **313, 314** are configured to increase the negative stiffness or mass efficiency of the structure **300.**

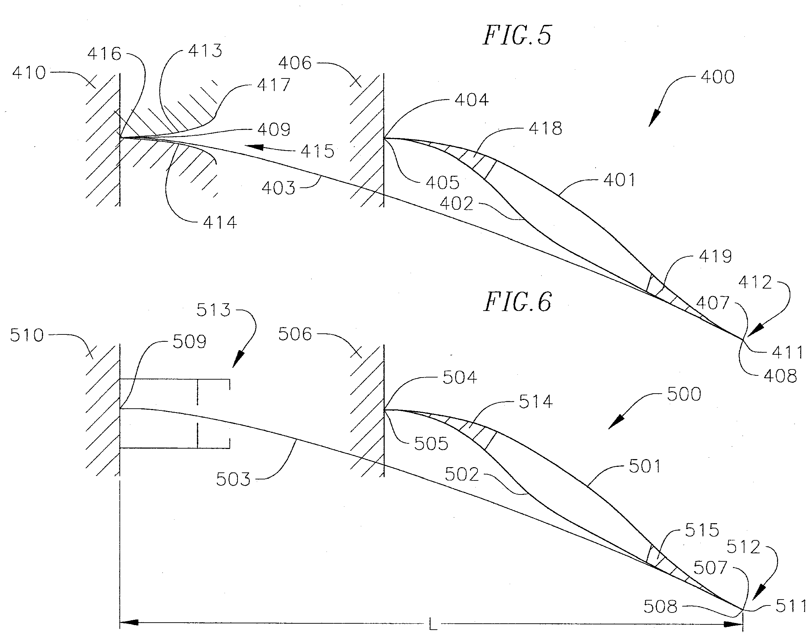

With reference now to the embodiment illustrated in FIG. 5, a negative stiffness structure **400** according to another embodiment of the present disclosure includes a pair of upper and lower compressive members **401, 402** and a tensile member **403.** Inner ends **404, 405** of the compressive members **401, 402,** respectively, are fixedly coupled to a first structure **406** and outer ends **407, 408** of the compressive members **401, 402** are free. In the illustrated embodiment, the inner ends **404, 405** and the outer ends **407, 408,** respectively, of the compressive members **401, 402** are coupled together. The compressive members **401, 402** are preformed into a curved or contoured shape (e.g., a cosine shape) extending in opposite directions (e.g., the upper compressive member **401** is curved upward and the lower compressive member **402** is curved downward). Additionally, in the illustrated embodiment, an inner end **409** of the tensile member **403** is coupled to a second structure **410** and an outer end **411** of the tensile member **403** is coupled to the outer ends **407, 408** of the compressive members **401, 402.** Together, the outer ends **411, 407, 408** of the tensile member **403** and the compressive members **401, 402** define a tip **412** of the negative stiffness structure **400.** The tensile member **403** and the compressive members **401, 402** may be the same or similar to the tensile member **103** and the compressive members **101, 102** described above with reference to the embodiment illustrated in FIGS. 1A-1D.

Still referring to the embodiment illustrated in FIG. 5, the second structure **410** includes a pair of curved walls or surfaces **413, 414** diverging apart from each other. Together, the curved walls **413, 414** define a tapered or wedge-like recess **415.** The recess **415** tapers between a narrower end **416** and a wider end **417** along a direction extending from the inner end **409** to the outer end **411** of the tensile member **403.** The inner end **409** of the tensile member **403** is received in the tapered recess **415** defined by the pair of curved walls **413, 414** of the second structure **410.** Accordingly, as the tip **412** of the structure **400** is deflected either upward or downward, a contact point between the tensile member **403** and the second structure **410** shifts in a direction toward the outer end **411** of the tensile member **403** (e.g., the contact point between the tensile member **403** and the upper or lower curved wall **413, 414** of the second structure **410** continuously changes during the stroke of the tip **412** of the structure **400**). Varying the contact point between the tensile member **403** and the second structure **410** is configured to passively change the effective length of the tensile member **403** and thereby alter the mechanical response of the structure **400.** As used herein, the "effective length" of the tensile member **403** is defined as the length of the tensile member **403** from the contact point between the tensile member **403** and one of the curved walls **413, 414** and the outer end **411** of the tensile member **403.** In one or more alternate embodiments, the structure **400** may include a plurality of discrete stops configured to passively adjust the effective length of the tensile member **403.** For instance, in one embodiment, the curved walls **413, 414** of the second structure **410** may include a plurality of discrete projections or edges (e.g., the curved walls **413, 414** may not be smooth). The contact between the discrete projections and the tensile member **403** is configured to adjust the effective length of the tensile member **403.**

Additionally, in the embodiment illustrated in FIG. 5, the negative stiffness structure **400** also includes a pair of wedge-shaped inserts **418, 419** disposed between opposite ends of the compressive members **401, 402.** In one embodiment, the wedge-shaped inserts **418, 419** may be the same or similar to the wedge-shaped inserts **313, 314** described above with reference to the embodiment illustrated in FIG. 4. In one or more alternate embodiments, the negative stiffness structure **400** may be provided without the wedge-shaped inserts **418, 419.**

With reference now to the embodiment illustrated in FIG. 6, a negative stiffness structure **500** according to another embodiment of the present disclosure includes a pair of upper and lower compressive members **501, 502** and a tensile member **503.** Inner ends **504, 505** of the compressive members **501, 502,** respectively, are fixedly coupled to a first structure **506** and outer ends **507, 508** of the compressive members **501, 502** are free. In the illustrated embodiment, the inner ends **504, 505** and the outer ends **507, 508,** respectively, of the compressive members **501, 502** are coupled together. The compressive members **501, 502** are preformed into a curved or contoured shape (e.g., a cosine shape) extending in opposite directions (e.g., the upper compressive member **501** is curved upward and the lower compressive member **502** is curved downward). Additionally, in the illustrated embodiment, an inner end **509** of the tensile member **503** is coupled to a second structure **510** and an outer end **511** of the tensile member **503** is coupled to the outer ends **507, 508** of the compressive members **501, 502.** Together, the outer ends **511, 507, 508** of the tensile member **503** and the compressive members **501, 502** define a tip **512** of the negative stiffness structure **500.** The tensile member **503** and the compressive members **501, 502** may be the same or similar to the tensile member **103** and the compressive members **101, 102** described above with reference to the embodiment illustrated in FIGS. 1A-1D.

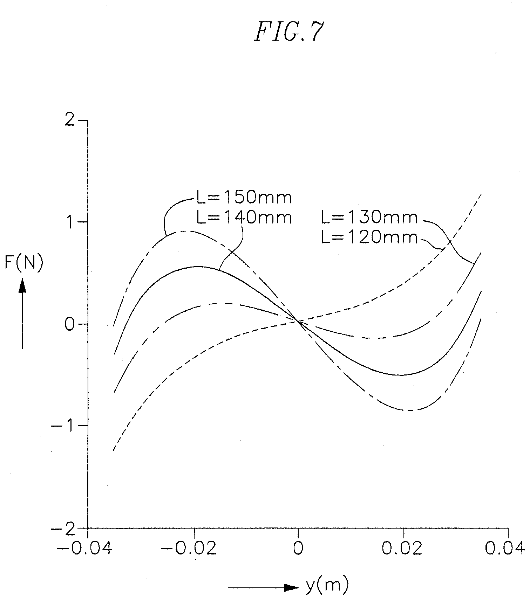

With continued reference to the embodiment illustrated in FIG. 6, the negative stiffness structure **500** also includes a clamp **513** coupled to the second structure **510.** The clamp **513** is configured to clamp onto the tensile member **503** at various points or positions along the length of the tensile member **503.** Clamping onto the tensile member **503** is configured to actively alter the effective length of the tensile member **503** and thereby vary the mechanical response of the structure **500,** as described below with reference to FIG. 7. When the clamp **513** engages the tensile member **503,** the effective length of the tensile member **503** is defined as the length of the tensile member **503** from the clamping point to the outer end **511** of the tensile member **503.**

Additionally, although in the illustrated embodiment the negative stiffness structure **500** also includes a pair of wedge-shaped inserts **514, 515** disposed between opposite ends of the compressive members **501, 502,** in one or more alternate embodiments, the negative stiffness structure **500** may be provided without the wedge-shaped inserts **514, 515.** In one embodiment, the wedge-shaped inserts **514, 515** may be the same or similar to the wedge-shaped inserts **313, 314** described above with reference to the embodiment illustrated in FIG. 4.

FIG. 7 is a plot showing the mechanical response of the embodiment of the negative stiffness structure **500** illustrated in FIG. 6 for a range of different clamping positions at which the clamp **513** is clamped onto the tensile member **503.** As described above, the clamp **513** is configured to reduce the effective length of the tensile member **503** by clamping onto the tensile member **503.** In particular, FIG. 7 illustrates the mechanical response of the negative stiffness structure **500** when the effective length of the tensile member **503** has been reduced from an initial length **L** of approximately or about 150mm to approximately or about 140mm, approximately or about 130mm, and approximately or about 120 mm.

When the clamp **513** was not actuated, such that the tensile member **503** had an effective length equal to its overall length **L** of approximately or about 150mm, the structure **500** exhibited positive stiffness from a range of tip **512** deflections from approximately or about -0.02m to approximately or about +0.02m and the structure **500** exhibited negative stiffness for a range of tip **512** deflections from approximately or about -0.02m to approximately or about -0.04m and from approximately or about +0.02m to approximately or about +0.04m. Additionally, the structure **500** exhibited a maximum positive stiffness force of approximately or about 0.9N and a maximum negative stiffness force of approximately or about 0N. When the clamp **513** was actuated such that the tensile member **503** has an effective length of approximately or about 140mm (i.e., the clamp **513** was clamped onto the tensile member **503** at approximately or about 10mm from the inner end **509** of the tensile member **503),** the structure **500** exhibited positive stiffness for a range of tip **512** deflections from approximately or about -0.02m to approximately or about +0.02m, a maximum positive stiffness force of approximately or about 0.5N, and a maximum negative stiffness force of approximately or about 0.2N. When the clamp **513** was actuated such that the tensile member **503** had an effective length of approximately or about 130mm (i.e., the clamp **513** was clamped onto the tensile member **503** at approximately or about 20mm from the inner end **509** of the tensile member **503),** the structure **500** exhibited positive stiffness for a range of tip **512** deflections from approximately or about -0.02m to approximately or about +0.02m, a maximum positive stiffness force of approximately or about 0.1N, and a maximum negative stiffness force of approximately or about 0.7N. When the clamp **513** was actuated such that the tensile member **503** had an effective length of approximately or about 120mm (i.e., the clamp **513** was clamped onto the tensile member **503** at approximately or about 30mm from the inner end **509** of the tensile member **503),** the structure **500** exhibited negative stiffness across the entire range of tip **512** deflections from approximately or about -0.04m to approximately or about +0.04m and exhibited a maximum negative stiffness force of approximately or about 1.2N.

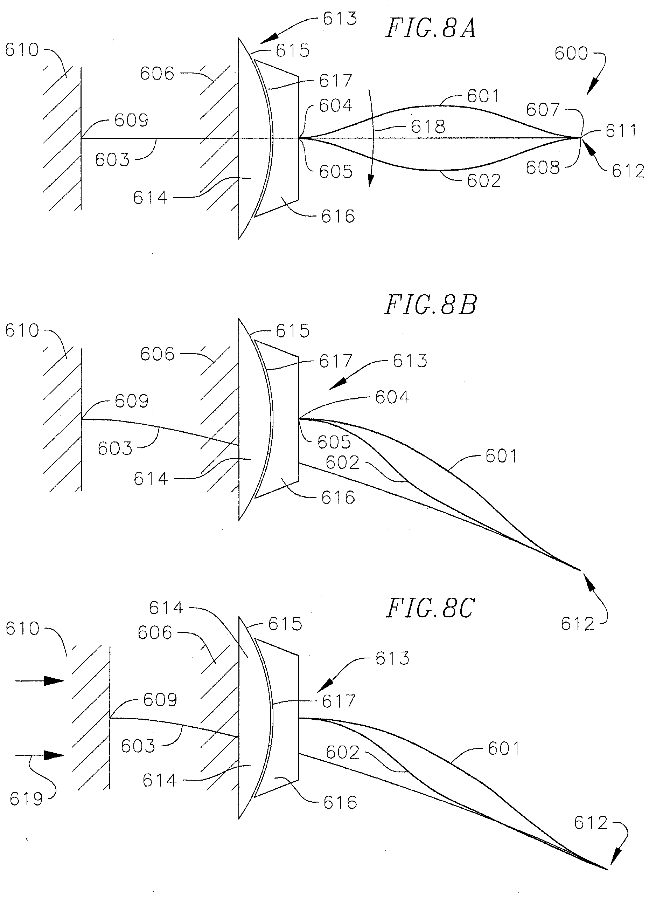

With reference now to the embodiment illustrated in FIGS. 8A-8D, a negative stiffness structure **600** according to another embodiment of the present disclosure includes a pair of upper and lower compressive members **601, 602** and a tensile member **603.** Inner ends **604, 605** of the compressive members **601, 602,** respectively, are fixedly coupled to a first structure **606** and outer ends **607, 608** of the compressive members **601, 602** are free. In the illustrated embodiment, the inner ends **604, 605** and the outer ends **607, 608,** respectively, of the compressive members **601, 602** are coupled together. The compressive members **601, 602** are preformed into a curved or contoured shape (e.g., a cosine shape) extending in opposite directions (e.g., the upper compressive member **601** is curved upward and the lower compressive member **602** is curved downward). Additionally, in the illustrated embodiment, an inner end **609** of the tensile member **603** is coupled to a second structure **610** and an outer end **611** of the tensile member **603** is coupled to the outer ends **607, 608** of the compressive members **601, 602.** Together, the outer ends **611, 607, 608** of the tensile member **603** and the compressive members **601, 602** define a tip **612** of the negative stiffness structure **600.** The tensile member **603** and the compressive members **601, 602** may be the same or similar to the tensile member **103** and the compressive members **101, 102** described above with reference to the embodiment illustrated in FIGS. 1A-1D.

With continued reference to the embodiment illustrated in FIGS. 8A-8D, the negative stiffness structure **600** also includes a clutching or braking mechanism **613** coupled to the first structure **606.** As described in more detail below, the clutching mechanism **613** is configured to enable the angular position of the tensile member **603** and the upper and lower compressive members **601, 602** to be adjusted while maintaining the symmetry of the compressive members **601, 602** about the tensile member **603.** The angular position of the tensile member **603** and the compressive members **601, 602** may be adjusted based on the structure or device into which the negative stiffness structure **600** is intended to be incorporated and/or based on the nature of the external load applied to the tip **612** of the negative stiffness structure **600.** The clutching mechanism **613** may be any suitable type of mechanism for reversably locking and unlocking two surfaces together, such as, for instance, a friction type or kind clutching mechanism or a mechanical locking type or kind clutching mechanism.

Stiff referring to the embodiment illustrated in FIGS. 8A-8D, the clutching mechanism **613** includes an inner clutching member **614** having an outer interface surface **615** and an outer clutching member **616** having an inner interface surface **617** that matches or substantially matches the shape or contour of the outer interface surface **615** of the inner clutching member **614** (e.g., the interface surfaces **615, 617** of the inner and outer clutching members **614, 616** are complementary). In the illustrated embodiment, the outer interface surface **615** of the inner clutching member **614** is a convex surface and the inner interface surface **617** of the outer clutching member **616** is a concave surface that conforms or substantially conforms to the convex outer interface surface **615** of the inner clutching member **614.** Additionally, in one embodiment, the outer interface surface **615** of the inner clutching member **614** may define an arc centered about the inner end **609** of the tensile member **603.** In one or more alternate embodiments, the interface surfaces **615, 617** of the inner and outer clutching members **614, 616** may have any other shapes suitable for enabling the outer clutching member **616** to rotate or pivot (arrow **618**) relative to the inner clutching member **614.** For instance, in one embodiment, the inner clutching member **614** may include a concave interface surface **615** and the outer clutching member **616** may include a convex interface surface **617** (e.g., the inner and outer clutching members **614, 616** may function similar to a ball and socket joint). Additionally, in the illustrated embodiment, the inner ends **604, 605** of the compressive members **601, 602** are coupled to the outer clutching member **616.**

As illustrated in FIG. 8B, before the angular position of the compressive members **601, 602** and the outer clutching member **616** have been adjusted, the negative stiffness structure **600** is configured to function in the same or similar manner as the embodiment described above with reference to FIGS. 1A-1D in response to a load applied to the tip **612** of the structure **600.**

The angular position of the tensile and compressive members **601, 602** may be adjusted (arrow **618**) by reducing the tension applied to the tensile member **603** or increasing the effective length of the tensile member **603.** In one embodiment, the inner end **609** of the tensile member **603** may be coupled to any suitable mechanism configured to adjust the tension of the tensile member **603** or adjust the effective length of the tensile member **603.** As illustrated in FIG. 8C, the tension applied to the tensile member **603** may be reduced by moving (arrow **619**) the second structure **610** to which the inner end **609** of the tensile member **603** is fixedly coupled in a direction toward the outer end **611** of the tensile member **603.** In another embodiment, the inner end **609** of the tensile member **603** may be coupled to an actuator (e.g., a pulley or a gear) configured to increase the effective length of the tensile member **603** and thereby decrease the tension applied to the tensile member **603.**

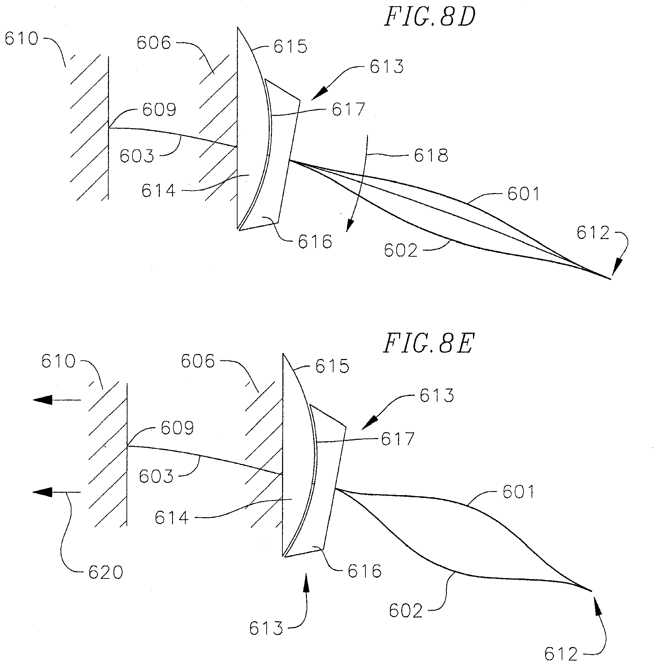

Reducing the tension applied to the tensile member **603** or increasing the effective length of the tensile member **603** is configured to reduce the compressive force applied to the compressive members **601, 602** and thereby reduce the friction between the interface surfaces **615, 617** of the inner and outer clutching members **614, 616.** As illustrated in FIG. 8D, the reduced friction between the interface surfaces **615, 617** of the inner and outer clutching members **614, 616** causes or enables the outer clutching member **616** to rotate, pivot, or slide downward (arrow **618**) along the interface surface **615** of the inner clutching member **614.** Once the outer clutching member **616** and the compressive members **601, 602** coupled thereto have rotated down (arrow **618**) into the desired angular position, as illustrated in FIG. 8E, the desired angular position may be set by increasing the tension applied to the tensile member **603** or decreasing the effective length of the tensile member **603** to increase the compressive force applied to the compressive members **601, 602.** As illustrated in FIG. 8E, the tensile applied to the tensile member **603** may be increased or the effective length of the tensile member **603** may be decreased by moving (arrow **620**) the second structure **610** in a direction away from the outer end **611** of the tensile member **603** or by actuating the actuator coupled to the inner end **609** of the tensile member **603.**

The increased compressive force applied to the compressive members **601, 602** is configured to draw the outer clutching member **616** into tighter engagement with the inner clutching member **614** and thereby increase the friction between the interface surfaces **615, 617** of the inner and outer clutching members **614, 616.** The increased friction between the interface surfaces **615, 617** of the inner and outer clutching members **614, 616** is configured to prevent the outer clutching member **616** and the compressive members **601, 602** coupled thereto from inadvertently rotating (arrow 618) relative to the inner clutching member 614. In one embodiment, the clutching mechanism **613** is configured to adjust the angular position of the tensile member **603** and the compressive members **601, 602** by approximately or about +/-10 degrees from the neutral position shown in FIG. 8A, although in one or more alternate embodiments, the clutching mechanism **613** may be configured to adjust the angular position of the tensile member **603** and the compressive members **601, 602** to any other suitable extent.

Once the negative stiffness structure **600** has been positioned into the desired angular position, the negative stiffness structure **600** is configured to function in the same or similar manner as the negative stiffness structure **100** described above in detail with reference to FIGS. 1A-1D and FIG. 2 when a load is applied to the tip **612** of the structure **600.**

Additionally, in one or more alternate embodiments, the negative stiffness structure **600** may include one or more wedge-shaped inserts disposed between the compressive members **601, 602.** The wedge-shaped inserts may be the same or similar to the wedge-shaped inserts **313, 314** described above with reference to the embodiment illustrated in FIGS. 4.

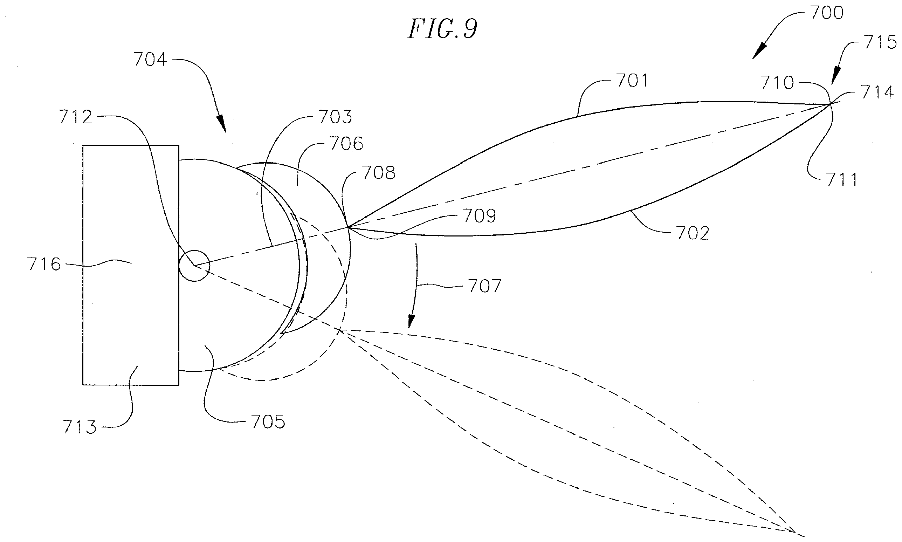

With reference now to FIG. 9, a negative stiffness structure **700** according to another embodiment of the present disclosure includes a pair of upper and lower compressive members **701, 702** and a tensile member **703.** The negative stiffness structure **700** also includes a clutching mechanism **704** that includes an inner clutching member **705** and an outer clutching member **706** configured to selectively pivot or rotate (arrow **707**) along the inner clutching member **705** from a first angular position (shown in solid lines) to a second angular position (shown in dashed lines). As described above with reference to the embodiment illustrated in FIGS. 8A-8D, the clutching mechanism **704** is configured to enable the angular position of the tensile member **703** and the upper and lower compressive members **701, 702** to be adjusted, such as, for instance, based on the structure or device into which the negative stiffness structure **700** is intended to be incorporated and/or based on the nature of the external load applied to the negative stiffness structure **700.** Inner ends **708, 709** of the compressive members **701, 702,** respectively, are fixedly coupled to the outer clutching member **706** and outer ends **710, 711** of the compressive members **701, 702** are free. In the illustrated embodiment, the inner ends **708, 709** and the outer ends **710, 711,** respectively, of the compressive members **701, 702** are coupled together. The compressive members **701, 702** are preformed into a curved or contoured shape (e.g., a cosine shape) extending in opposite directions (e.g., the upper compressive member **701** is curved upward and the lower compressive member **602** is curved downward). Additionally, in the illustrated embodiment, an inner end **712** of the tensile member **703** is coupled to a structure **713** and an outer end **714** of the tensile member **703** is coupled to the outer ends **710, 711** of the compressive members **701, 702.** Together, the outer ends **714, 710, 711 of** the tensile member **703** and the compressive members **701, 702** define a tip **715** of the negative stiffness structure **700.** The tensile member **703** and the compressive members **701, 702** may be the same or similar to the tensile member **103** and the compressive members **101, 102** described above with reference to the embodiment illustrated in FIGS. 1A-1D. The clutching mechanism **704** may be the same or similar to the clutching mechanism **613** described above with reference to FIGS. 8A-8D. In one embodiment, the structure **713** also includes an actuator **716** configured to adjust the tension applied to the tensile member **703.** Adjusting the tension of the tensile member **703** is configured to increase or decrease the friction between the inner and outer clutching members **705, 706** and thereby lock the angular position of the compressive members **701, 702** and the tensile member **703** or permit the outer clutching member **706** and the compressive members **701, 702** to rotate (arrow **707**) along the inner clutching member **705** into a different angular position (shown in dashed lines).

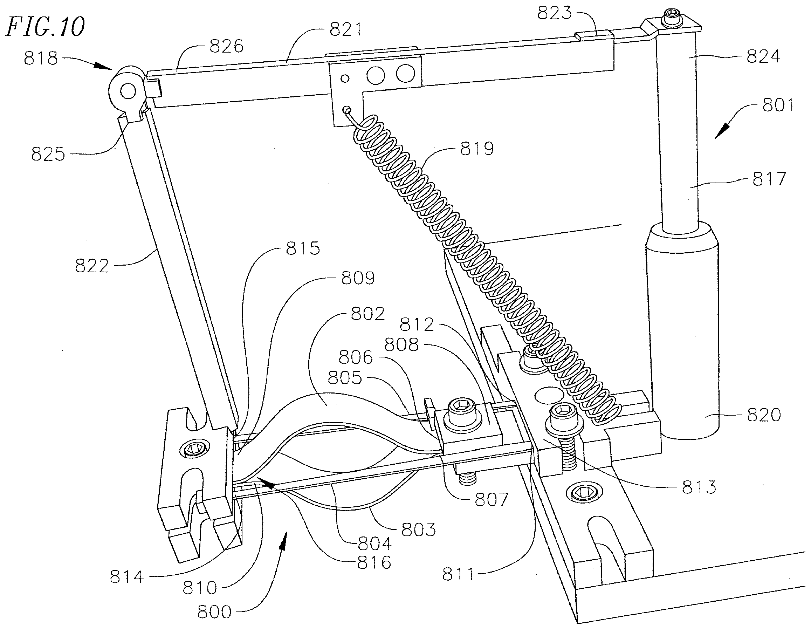

FIG. 10 illustrates a negative stiffness structure **800** according to one embodiment of the present disclosure integrated with a host structure **801.** The negative stiffness structure **800** may be the same or similar to any one of the embodiments described above. In the illustrated embodiment, the negative stiffness structure **800** includes a pair of upper and lower compressive members **802, 803** and a pair of tensile members **804, 805.** Inner ends **806, 807** of the compressive members **802, 803,** respectively, are fixedly coupled to a first structure **808.** In the illustrated embodiment, the inner ends **806, 807** and outer ends **809, 810,** respectively, of the compressive members **802, 803** are coupled together. The compressive members **802, 803** are preformed into a curved or contoured shape (e.g., a cosine shape) extending in opposite directions (e.g., the upper compressive member **802** is curved upward and the lower compressive member **803** is curved downward). Additionally, in the illustrated embodiment, inner ends **811, 812** of the tensile members **804, 805** are coupled to a second structure **813** and outer ends **814, 815** of the tensile members **804, 805** are coupled to the outer ends **809, 810** of the compressive members **802, 803.** Together, the outer ends **814, 815, 809, 810** of the tensile members **804, 805** and the compressive members **802, 803** define a tip **816** of the negative stiffness structure **800.** The tensile members **804, 805** and the compressive members **802, 803** may be the same or similar to the tensile member **103** and the compressive members **101, 102** described above with reference to the embodiment illustrated in FIGS. 1A-1D.

Still referring to the embodiment illustrated in FIG. 10, the host structure **801** includes a tie rod **817,** a positive stiffness swing arm **818,** and a spring **819.** In the illustrated embodiment, a lower end **820** of the tie rod **817** is coupled to the second structure **813** to which the inner ends **811, 812** of the tensile members **804, 805** are coupled. The tie rod **817** extends upward from the second structure **813.** The swing arm **818** includes a horizontal member **821** and a vertical member **822** hingedly coupled to the horizontal member **821.** An inner end **823** of the horizontal member **821** is coupled to and extends outward from an upper end **824** of the tie rod **817.** An upper end **825** of the vertical member **822** is hingedly coupled to an outer end **826** of the horizontal member **821.** A lower end **827** of the vertical member **822** is coupled to the outer ends **814, 815, 809, 810** of the tensile members **804, 805** and the compressive members **802, 803.** In the illustrated embodiment, the spring **819** extends between an intermediate portion of the horizontal member **821** and the second structure **813** to which the inner ends **811, 812** of the tensile members **804, 805** are coupled.

The mechanical response of the tip **816** of the negative stiffness structure **800** is transmitted to the vertical member **822** of the swing arm **818.** Additionally, the mechanical response of the negative stiffness structure **800** may be varied by adjusting the tension applied to the tensile members **804, 805** or adjusting the effective length of the tensile members **804, 805.** The negative stiffness structure **800** may include any suitable mechanism for adjusting the tension applied to the tensile members **804, 805** and/or adjusting the effective length of the tensile members **804, 805,** such as, for instance, an actuator (e.g., a pulley or a gear) coupled to the inner ends **811, 812** of the tensile members **804, 805.** For instance, in one embodiment, the mechanical response of the negative stiffness structure **800** may be varied as shown in FIG. 2.

While this invention has been described in detail with particular references to exemplary embodiments thereof, the exemplary embodiments described herein are not intended to be exhaustive or to limit the scope of the invention to the exact forms disclosed. Although relative terms such as "outer," "inner," "upper," "lower," and similar terms have been used herein to describe a spatial relationship of one element to another, it is understood that these terms are intended to encompass different orientations of the various elements and components of the invention in addition to the orientation depicted in the figures. Additionally, as used herein, the term "substantially," "about," and similar terms are used as terms of approximation and not as terms of degree, and are intended to account for the inherent deviations in measured or calculated values that would be recognized by those of ordinary skill in the art. Moreover, when a component is component is referred to as being "coupled" to another component, it can be directly attached to the other component or intervening components may be present therebetween.

## Claims

1. A negative stiffness structure (100), comprising:
at least one flexible tensile member (103) having a first end (109) and a second end (111), the first end (109) coupled to a first structure (110); and
a first curved compressive member (101) having a first end (104) and a second end (107), the first end (104) of the first curved compressive member (101) coupled to a second structure (106),
**characterized in that**
the second end (107) of the first curved compressive member (101) is coupled to the second end (111) of the tensile member (103) defining a tip (112) of the negative stiffness structure (100), wherein
a length of the tensile member (103) is greater than a length of the first curved compressive member (101), and
the tip (112) of the negative stiffness structure (100) exhibits a negative stiffness mechanical response to a load applied to the tip (112), the negative stiffness mechanical response acting in a direction orthogonal to the length of the tensile member (103).

2. The negative stiffness structure of claim 1, further comprising a second curved compressive member (102) having a first end (105) coupled to the second structure (106) and a second end (108) coupled to the second end (111) of the at least one flexible tensile member (103).

3. The negative stiffness structure of claim 2, wherein the first curved compressive member (101) is buckled in a first direction, and wherein the second curved compressive member (102) is buckled in a second direction opposite the first direction.

4. The negative stiffness structure of any one of claims 2 or 3, wherein the first and second curved compressive members (101, 102) are cosine shaped.

5. The negative stiffness structure of any one of claims 2-4, further comprising first and second wedge-shaped inserts (313, 314) between the first curved compressive member and the second curved compressive member, the first wedge-shaped insert (313) proximate the first ends of the first and second curved compressive members, and the second wedge-shaped insert (314) proximate the second ends of the first and second curved compressive members.

6. The negative stiffness structure of any one of claims 2-5, wherein the first structure comprises a pair of curved walls (413, 414) defining a tapered recess (415), and wherein the first end of the at least one flexible tensile member is received in the tapered recess (415).

7. The negative stiffness structure of any one of claims 2-6, wherein the first curved compressive member has a substantially uniform thickness or a non-uniform thickness.

8. The negative stiffness structure of any one of claims 2-7, wherein the first curved compressive member comprises a stack of a plurality of curved compressive members.

9. The negative stiffness structure of any one of claims 2-8, wherein the at least one flexible tensile member comprises a plurality of tensile members.

10. The negative stiffness structure of any one of claims 2-9, wherein the at least one flexible tensile member is selected from the group consisting of a beam, a rope, a cable, a rod, a chain, or a belt.

11. The negative stiffness structure of any one of claims 2-10, further comprising an actuator (210) coupled to the first end of the at least one flexible tensile member, the actuator (210) configured to adjust tension applied to the at least one flexible tensile member or adjust an effective length of the at least one flexible tensile member to vary the mechanical response of the tip.

12. The negative stiffness structure of any one of claims 2-10, further comprising a clamping actuator coupled to the first end of the at least one flexible tensile member, the clamping actuator configured to clamp the at least one flexible tensile member at a plurality of positions along a length of the at least one flexible tensile member.

13. The negative stiffness structure of claim 11, wherein the actuator (210) is a toothed gear.

14. The negative stiffness structure of claim 11, wherein the actuator (210) is a pulley.

15. The negative stiffness structure of any one of claims 2-10, wherein the second structure comprises a clutching mechanism (613), the clutching mechanism (613) comprising:
a first clutching member (614) having a convex surface; and
a second clutching member (616) having a concave surface mating with the convex surface of the first clutching member (614), wherein the second clutching member (616) is configured to slide along the convex surface of the first clutching member (614) between a first angular position and a second angular position.

## Patentansprüche

1. Struktur mit negativer Steifheit (100), umfassend:
mindestens ein flexibles Zugelement (103) mit einem ersten Ende (109) und einem zweiten Ende (111), wobei das erste Ende (109) an eine erste Struktur (110) gekoppelt ist; und
ein erstes gekrümmtes Druckelement (101) mit einem ersten Ende (104) und einem zweiten Ende (107), wobei das erste Ende (104) des ersten gekrümmten Druckelements (101) an eine zweite Struktur (106) gekoppelt ist,
**dadurch gekennzeichnet, dass**
das zweite Ende (107) des ersten gekrümmten Druckelements (101) an das zweite Ende (111) des Zugelements (103) gekoppelt ist, um eine Spitze (112) der Struktur mit negativer Steifheit (100) auszubilden, wobei
eine Länge des Zugelements (103) größer ist als eine Länge des ersten gekrümmten Druckelements (101), und
die Spitze (112) der Struktur mit negativer Steifheit (100) eine mechanische Reaktion mit negativer Steifheit auf eine Last, die auf die Spitze (112) aufgebracht wird, aufweist, wobei die mechanische Reaktion mit negativer Steifheit in eine Richtung wirkt, die orthogonal zur Länge des Zugelements (103) ist.

2. Struktur mit negativer Steifheit nach Anspruch 1, ferner umfassend ein zweites gekrümmtes Druckelement (102) mit einem ersten Ende (105), das an die zweite Struktur (106) gekoppelt ist, und einem zweiten Ende (108), das an das zweite Ende (111) des mindestens einen flexiblen Zugelements (103) gekoppelt ist.

3. Struktur mit negativer Steifheit nach Anspruch 2, wobei das erste gekrümmte Druckelement (101) in eine erste Richtung angelegt ist, und wobei das zweite gekrümmte Druckelement (102) in eine zweite Richtung, die der ersten Richtung entgegengesetzt ist, angelegt ist.

4. Struktur mit negativer Steifheit nach einem der Ansprüche 2 oder 3, wobei das erste und zweite gekrümmte Druckelement (101, 102) kosinusförmig sind.

5. Struktur mit negativer Steifheit nach einem der Ansprüche 2-4, ferner umfassend eine erste und zweite keilförmige Einlagen (313, 314) zwischen dem ersten gekrümmten Druckelement und dem zweiten gekrümmten Druckelement, wobei die erste keilförmige Einlage (313) zu den ersten Enden des ersten und zweiten gekrümmten Druckelements benachbart ist, und die zweite keilförmige Einlage (314) zu dem zweiten Enden der ersten und zweiten gekrümmten Druckelements benachbart ist.

6. Struktur mit negativer Steifheit nach einem der Ansprüche 2-5, wobei die erste Struktur ein Paar von gekrümmten Wänden (413, 414) umfasst, die eine konische Vertiefung (415) ausbildet, und wobei das erste Ende des mindestens einen flexiblen Zugelements in der konischen Vertiefung (415) aufgenommen wird.

7. Struktur mit negativer Steifheit nach einem der Ansprüche 2-6, wobei das erste gekrümmte Druckelement eine im Wesentlichen einheitliche Dicke oder eine uneinheitliche Dicke aufweist.

8. Struktur mit negativer Steifheit nach einem der Ansprüche 2-7, wobei das erste gekrümmte Druckelement einen Stapel von einer Mehrheit von gekrümmten Druckelementen umfasst.

9. Struktur mit negativer Steifheit nach einem der Ansprüche 2-8, wobei das mindestens eine flexible Zugelement eine Mehrzahl von Zugelementen umfasst.

10. Struktur mit negativer Steifheit nach einem der Ansprüche 2-9, wobei das mindestens eine flexible Zugelement ausgewählt ist aus der Gruppe, die aus einem Balken, einem Strick, einem Kabel, einer Kette oder einem Gurt besteht.

11. Struktur mit negativer Steifheit nach einem der Ansprüche 2-10, ferner umfassend einen Aktuator (210), der an das erste Ende des mindestens einen flexiblen Zugelements gekoppelt ist, wobei der Aktuator (210) dazu ausgestaltet ist, einen auf das mindestens eine flexible Zugelement aufgebrachten Zug anzupassen oder eine effektive Länge des mindestens einen flexiblen Zugelements anzupassen, um die mechanische Reaktion der Spitze zu variieren.

12. Struktur mit negativer Steifheit nach einem der Ansprüche 2-10, ferner umfassend einen Klemmaktuator, der an das erste Ende des mindestens einen flexiblen Zugelements gekoppelt ist, wobei der Klemmaktuator dazu ausgestaltet ist, das mindestens eine flexible Zugelement an einer Mehrzahl von Positionen entlang einer Länge des mindestens einen flexiblen Zugelements zu einzuklemmen.

13. Struktur mit negativer Steifheit nach Anspruch 11, wobei der Aktuator (210) ein Zahnrad ist.

14. Struktur mit negativer Steifheit nach Anspruch 11, wobei der Aktuator (210) eine Riemenscheibe ist.

15. Struktur mit negativer Steifheit nach einem der Ansprüche 2-10, wobei die zweite Struktur einen Kupplungsmechanismus (613) umfasst, wobei der Kupplungsmechanismus (613) Folgendes umfasst:
ein erstes Kupplungselement (614) mit einer konvexen Oberfläche; und
ein zweites Kupplungselement (616) mit einer konkaven Oberfläche, die sich mit der konvexen Oberfläche des ersten Kupplungselements (614) paart, wobei das zweite Kupplungselement (616) dazu ausgestaltet ist, zwischen einer ersten Winkelposition und einer zweiten Winkelposition entlang der konvexen Oberfläche (614) zu gleiten.

## Revendications

1. Structure à rigidité négative (100), comprenant :
au moins un élément de tension souple (103) présentant une première extrémité (109) et une deuxième extrémité (111), la première extrémité (109) étant raccordée à une première structure (110) ; et
un premier élément de compression bombé (101) présentant une première extrémité (104) et une deuxième extrémité (107), la première extrémité (104) du premier élément de compression bombé (101) étant raccordée à une deuxième structure (106),
**caractérisée en ce que**
la deuxième extrémité (107) du premier élément de compression bombé (101) est raccordée à la deuxième extrémité (111) de l'élément de tension (103) en définissant un bout (112) de la structure à rigidité négative (100),
la longueur de l'élément de tension (103) étant supérieure à la longueur du premier élément de compression bombé (101), et
le bout (112) de la structure à rigidité négative (100) présentant une réaction mécanique à rigidité négative à une charge appliquée sur le bout (112), ladite réaction mécanique à rigidité négative agissant dans une direction orthogonale à la longueur de l'élément de tension (103).

2. Structure à rigidité négative selon la revendication 1, comprenant en outre un deuxième élément de compression bombé (102) présentant une première extrémité (105) raccordée à la deuxième structure (106) et une deuxième extrémité (108) raccordée à la deuxième extrémité (111) dudit au moins un élément de tension souple (103).

3. Structure à rigidité négative selon la revendication 2, où le premier élément de compression bombé (101) est bombé dans une première direction, et où le deuxième élément de compression bombé (102) est bombé dans une deuxième direction opposée à la première direction.

4. Structure à rigidité négative selon la revendication 2 ou la revendication 3, où le premier et le deuxième éléments de compression bombés (101, 102) ont une forme cosinusoïdale.

5. Structure à rigidité négative selon l'une des revendications 2 à 4, comprenant en outre un premier et un deuxième inserts en forme de coin (313, 314) entre le premier élément de compression bombé et le deuxième élément de compression bombé, le premier insert en forme de coin (313) étant proche des premières extrémités du premier et du deuxième éléments de compression bombés, et le deuxième insert en forme de coin (314) étant proche des deuxièmes extrémités du premier et du deuxième éléments de compression bombés.

6. Structure à rigidité négative selon l'une des revendications 2 à 5, où la première structure comprend une paire de parois incurvées (413, 414) définissant une cavité effilée (415), et où la première extrémité dudit au moins un élément de tension souple est engagée dans la cavité effilée (415).

7. Structure à rigidité négative selon l'une des revendications 2 à 6, où le premier élément de compression bombé a une épaisseur sensiblement uniforme ou une épaisseur non uniforme.

8. Structure à rigidité négative selon l'une des revendications 2 à 7, où le premier élément de compression bombé comprend un empilement d'une pluralité d'éléments de compression bombés.

9. Structure à rigidité négative selon l'une des revendications 2 à 8, où ledit au moins un élément de tension souple comprend une pluralité d'éléments de tension.

10. Structure à rigidité négative selon l'une des revendications 2 à 9, où ledit au moins un élément de tension souple est sélectionné dans le groupe comprenant une barre, une corde, un câble, une tringle, une chaîne ou une courroie.

11. Structure à rigidité négative selon l'une des revendications 2 à 10, comprenant en outre un actionneur (210) raccordé à la première extrémité dudit au moins un élément de tension souple, ledit actionneur (210) étant prévu pour régler la tension appliquée sur ledit au moins un élément de tension souple ou régler la longueur effective dudit au moins un élément de tension souple, afin de modifier la réaction mécanique du bout.

12. Structure à rigidité négative selon l'une des revendications 2 à 10, comprenant en outre un actionneur de serrage raccordé à la première extrémité dudit au moins un élément de tension souple, ledit actionneur de serrage étant prévu pour serrer ledit au moins un élément de tension souple à une pluralité d'emplacements sur la longueur dudit au moins un élément de tension souple.

13. Structure à rigidité négative selon la revendication 11, où l'actionneur (210) est une roue dentée.

14. Structure à rigidité négative selon la revendication 11, où l'actionneur (210) est une poulie.

15. Structure à rigidité négative selon l'une des revendications 2 à 10, où la deuxième structure comprend un mécanisme d'embrayage (613), ledit mécanisme d'embrayage (613) comprenant :
un premier élément d'embrayage (614) présentant une surface convexe ; et
un deuxième élément d'embrayage (616) présentant une surface concave correspondant à la surface convexe du premier élément d'embrayage (614), le deuxième élément d'embrayage (616) étant prévu pour glisser entre une première position angulaire et une deuxième position angulaire le long de la surface convexe du premier élément d'embrayage (614).
